# EUROPEAN PATENT APPLICATION

(11) **EP 4 704 082 A1**
(43) Date of publication of application: **04.03.2026**
(21) Application number: 25198023.1
(22) Date of filing: 26.08.2025
(51) Int. Cl.: G10L 25/51, G10L 21/18, G06F 21/32, H04W 12/63

(54) **DEVICE AND COMPUTER-IMPLEMENTED METHOD FOR PRIVACY-PRESERVING AUTHENTICATION**

(30) Priority: 30.08.2024 US 202463688933 P
(71) Applicant: Solventum Intellectual Properties Company, Maplewood, MN 55144 (US)
(72) Inventor: Fuhs, Mark C., Pittsburgh, 15217 (US); Wang, Yinong, Woodbury, 55129 (US); Zimmer, Benjamin D., Hudson, 54016 (US); Falknor, Subhalakshmi M., Woodbury, 55125 (US); Woszczyna, Monika, Pittsburgh, 17221 (US)
(74) Representative: Vossius & Partner Patentanwälte Rechtsanwälte mbB

(57) **Abstract**

A computer-implemented method for privacy-preserving authentication includes: receiving a first privacy-preserving acoustic representation of a first audio segment associated with a first microphone from a first computing device, the first privacy-preserving acoustic representation being locally generated on the first computing device by a trained model based on the first audio segment; receiving a second privacy-preserving acoustic representation of a second audio segment associated with a second microphone from a second computing device, the second audio segment being generated by the second microphone contemporaneously with the first audio segment; generating a similarity metric score based on the first privacy-preserving acoustic representation and the second privacy-preserving acoustic representation; determining that the first microphone and the second microphone are associated with a substantially similar location based on the similarity metric score; and authenticating that the first microphone and the second microphone are associated with the substantially similar location.

## Description

### Technical Field

The present disclosure generally relates to a device and a computer-implemented method for privacy-preserving authentication.

### Background

Physicians and other healthcare providers increasingly rely on medical scribes to create medical documentation based on the conversation between the medical provider and patient. Traditionally, this involves the scribe being located remotely from the medical provider and the conversation may be recorded using a stationary microphone, such as a microphone contained within or connected to a desktop computer, or a microphone mounted in a room. As another example, such recordings may be generated using a mobile microphone, such as a microphone contained within or connected to a smartphone, tablet computer, or laptop computer that the healthcare provider carries from location to location. Such microphones typically capture the conversational speech and provide an audio signal representing that speech to a human scribe or to software executing on a connected computing device. The healthcare provider may need to log in to or otherwise be authenticated by the computing device, software, and/or account before dictating into the computing device.

The requirement for authentication can impose a significant burden on the healthcare provider in the environments described above, in which the healthcare provider may rapidly move from one location to another and thereby need to or benefit from using microphones connected to a large number of different computing devices in a short period of time, thereby requiring the healthcare provider to stop and be authenticated at each such computing device before using that computing device for dictation. Another consideration for authentication is the protection of privacy of audio that is used for authentication purposes. Specifically, it may be desired that the audio from the microphone should be recorded at the computing device only after the authentication of the healthcare provider.

### Summary

In a first aspect, the present disclosure provides a device for privacy-preserving authentication. The device includes at least one non-transitory computer-readable storage medium having instructions stored thereon. The device further includes at least one processor coupled to the at least one non-transitory computer-readable storage medium. The at least one processor is configured to execute the instructions to receive a first privacy-preserving acoustic representation of a first audio segment associated with a first microphone from a first computing device. The first privacy-preserving acoustic representation is locally generated on the first computing device by a trained model based on the first audio segment. The trained model has been configured to generate a privacy-preserving acoustic representation of an input audio segment. The at least one processor is further configured to execute the instructions to receive a second privacy-preserving acoustic representation of a second audio segment associated with a second microphone separate from the first microphone from a second computing device different from the first computing device. The second audio segment has been generated by the second microphone contemporaneously with the first audio segment. The second privacy-preserving acoustic representation is locally generated on the second computing device by the trained model based on the second audio segment. The at least one processor is further configured to execute the instructions to generate a similarity metric score based on the first privacy-preserving acoustic representation and the second privacy-preserving acoustic representation. The at least one processor is further configured to execute the instructions to determine that the first microphone and the second microphone are associated with a substantially similar location based on the similarity metric score. The at least one processor is further configured to execute the instructions to authenticate that the first microphone and the second microphone are associated with the substantially similar location.

In a second aspect, the present disclosure provides a computer-implemented method for privacy-preserving authentication. The computer-implemented method includes receiving a first privacy-preserving acoustic representation of a first audio segment associated with a first microphone from a first computing device. The first privacy-preserving acoustic representation is locally generated on the first computing device by a trained model based on the first audio segment. The trained model has been configured to generate a privacy-preserving acoustic representation of an input audio segment. The computer-implemented method further includes receiving a second privacy-preserving acoustic representation of a second audio segment associated with a second microphone separate from the first microphone from a second computing device different from the first computing device. The second audio segment has been generated by the second microphone contemporaneously with the first audio segment. The second privacy-preserving acoustic representation is locally generated on the second computing device by the trained model based on the second audio segment. The computer-implemented method further includes generating a similarity metric score based on the first privacy-preserving acoustic representation and the second privacy-preserving acoustic representation. The computer-implemented method further includes determining that the first microphone and the second microphone are associated with a substantially similar location based on the similarity metric score. The computer-implemented method further includes authenticating that the first microphone and the second microphone are associated with the substantially similar location.

The details of one or more examples of the disclosure are set forth in the accompanying drawings and the description below. Other features, objects, and advantages of the disclosure will be apparent from the description and drawings, and from the claims.

### Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1 is a schematic block diagram of a system including a device for privacy-preserving authentication according to an embodiment of the present disclosure;
FIG. 2 is a schematic block diagram depicting generation of a similarity metric score by the device of FIG. 1 according to an embodiment of the present disclosure;
FIG. 3 is a schematic block diagram of a system including a device for privacy-preserving authentication according to another embodiment of the present disclosure;
FIG. 4 is a schematic block diagram depicting generation of a similarity metric score by the device of FIG. 3 according to an embodiment of the present disclosure; and
FIG. 5 is a schematic block diagram of a system including a second computing device for privacy-preserving authentication according to an embodiment of the present disclosure;
FIG. 6 is a schematic block diagram depicting generation of a similarity metric score by the second computing device of FIG. 5 according to an embodiment of the present disclosure; and
FIG. 7 is flowchart depicting various steps of a computer-implemented method for privacy-preserving authentication according to an embodiment of the present disclosure.
FIG. 8 is an example set of histograms showing a similarity score using a conventional speaker verification system.
FIG. 9 is an example set of histograms showing a similarity score using techniques described in this disclosure.

### Detailed Description

In the following description, reference is made to the accompanying figures that form a part thereof and in which various embodiments are shown by way of illustration. It is to be understood that other embodiments are contemplated and may be made without departing from the scope or spirit of the present disclosure. The following detailed description, therefore, is not to be taken in a limiting sense.

In the following disclosure, the following definitions are adopted.

As recited herein, all numbers should be considered modified by the term "about." As used herein, "a," "an," "the," "at least one," and "one or more" are used interchangeably.

As used herein as a modifier to a property or attribute, the term "generally," unless otherwise specifically defined, means that the property or attribute would be readily recognizable by a person of ordinary skill but without requiring absolute precision or a perfect match (e.g., within +/- 20 % for quantifiable properties).

The term "substantially," unless otherwise specifically defined, means to a high degree of approximation (e.g., within +/- 10% for quantifiable properties) but again without requiring absolute precision or a perfect match.

The term "about," unless otherwise specifically defined, means to a high degree of approximation (e.g., within +/- 5% for quantifiable properties) but again without requiring absolute precision or a perfect match.

Terms such as same, equal, uniform, constant, strictly, and the like, are understood to be within the usual tolerances or measuring error applicable to the particular circumstance rather than requiring absolute precision or a perfect match.

As used herein, when a first material is termed as "similar" to a second material, at least 90% by weight of the first and second materials are identical and any variation between the first and second materials comprises less than about 10% by weight of each of the first and second materials.

As used herein, "at least one of A and B" and "at least one of A or B" should be understood to mean "only A, only B, or both A and B."

As used herein, the term "configured to" and like is at least as restrictive as the term "adapted to" and requires actual design intention to perform the specified function rather than mere physical capability of performing such a function.

As used herein, the term "patient," and its equivalents, refers to an individual being monitored and/or cared for within a clinical environment or who has been previously monitored and/or cared for within the clinical environment. In various examples, a patient is a human, but implementations of this disclosure are not limited thereto. Examples of the clinical environment may include, but are not limited to, a doctor's office, a medical facility, a medical practice, a medical lab, an urgent care facility, a medical clinic, an emergency room, an operating room, a hospital, a long term care facility, a rehabilitation facility, a nursing home, and a hospice facility.

As used herein, the term "healthcare provider" refers to any person working in the healthcare industry, such as doctors, nurses, physician's assistants, lab technicians, physical therapists, scribes (e.g., a transcriptionist), and the like.

As used herein, the term "clinical note" refers to a note including clinical data of a patient that is generated based on an interaction between the patient and a medical professional. Clinical notes may be stored in an electronic format (e.g., a text document), typically in an electronic health record (EHR).

As used herein, the term "score" refers to a value calculated or predicted to represent a degree of similarity between two sets of data. Scores may be characterized using various conventions. One example includes a numerical value ranging from 0 to 1.

As used herein, the term "processor" or "computer processor" refers any device that performs logic operations. A computer processor may include a general processor, a central processing unit, an application specific integrated circuit (ASIC), a digital signal processor, a field programmable gate array (FPGA), a digital circuit, an analog circuit, a controller, a microcontroller, any other type of processor, or any combination thereof.

As used herein, the term "instructions" refers to code (e.g., source code, compiled code, code that can be interpreted, executable code, etc.) that, when executed by a processor, causes the processor to perform various steps, functions, operations, and/or calculations, i.e., the conventional meaning of the term "instructions" with respect to digital technology.

As used herein, the term "communicatively coupled" refers to any type of connection or coupling that allows for the exchange or sharing of information. Two communicatively coupled components may be electrically coupled by, for example, a wire; optically coupled by, for example, an optical cable; and/or wirelessly coupled by, for example, a radio frequency or other transmission media. Two communicatively coupled components may be directly coupled, or indirectly coupled, such as via a network.

As used herein, the term "machine learning model" or "model" refers to a machine learning algorithm or collection of algorithms that takes structured and/or unstructured data inputs and generates a representation of the input . The representation may be a prediction or other representation corresponding to the input according to particular implementations. That is, a machine learning model may be a computer model or a computer representation that may be tuned (e.g., trained) based on inputs to approximate unknown functions. The process of building or optimizing a machine learning model is referred to herein as "training." Examples of machine-learning models include, for example, one or more of vectorization machine-learning models, sequence-to-sequence models, transformer models, a decision tree (e.g., a gradient boosted decision tree), a linear regression model, a logistic regression model, association rule learning, inductive logic programming, support vector learning, a Bayesian network, a regression-based model, a neural network, or combinations thereof.

As used herein, the term "neural network" may refer to one example of a machine learning model that can be tuned (e.g., trained) based on inputs to approximate unknown functions. In particular, the neural network may include a model of interconnected neurons (arranged in layers) that communicate and learn to approximate complex functions and generate outputs based on a plurality of inputs provided to the model. For example, the neural network may include deep neural network (DNN), deep convolutional neural networks (CNN), Region-CNN (R-CNN), Faster R-CNN, Mask R-CNN, fully convolutional neural networks, recurrent neural networks ("RNNs"), such as long short-term memory neural networks ("LSTMs"), graph neural networks, generative adversarial neural networks (GAN), and single-shot detect (SSD) networks. In other words, a neural network is an algorithm that implements deep learning techniques, which utilize a set of learned parameters arranged in layers according to a particular architecture to attempt to model high-level abstractions in data using supervisory data to tune parameters of the neural network.

The present disclosure relates to a computer-implemented method for privacy-preserving authentication. The computer-implemented method includes receiving a first privacy-preserving acoustic representation of a first audio segment associated with a first microphone from a first computing device. The first privacy-preserving acoustic representation is locally generated on the first computing device by a trained model based on the first audio segment. The trained model has been configured to generate a privacy-preserving acoustic representation of an input audio segment. The computer-implemented method further includes receiving a second privacy-preserving acoustic representation of a second audio segment associated with a second microphone separate from the first microphone from a second computing device different from the first computing device. The second audio segment has been generated by the second microphone contemporaneously with the first audio segment. The second privacy-preserving acoustic representation is locally generated on the second computing device by the trained model based on the second audio segment. The computer-implemented method further includes generating a similarity metric score based on the first privacy-preserving acoustic representation and the second privacy-preserving acoustic representation. The computer-implemented method further includes determining that the first microphone and the second microphone are associated with a substantially similar location based on the similarity metric score. The computer-implemented method further includes authenticating that the first microphone and the second microphone are associated with the substantially similar location.

The computer-implemented method of the present disclosure may enable privacy-preserving authentication of a healthcare provider. Specifically, the computer-implemented method may authenticate the healthcare provider on the second computing device by comparing the first privacy-preserving acoustic representation and the second privacy-preserving acoustic representation, which include insufficient information to infer a content of the speech in the first audio segment and the second audio segment, respectively. Furthermore, the second privacy-preserving acoustic representation may be locally generated on the second computing device. As a result, the content of the speech captured by the second microphone may not be transmitted to any external device for authentication purposes. This may prevent transmission of undesired private conversations captured by the second microphone to any external device.

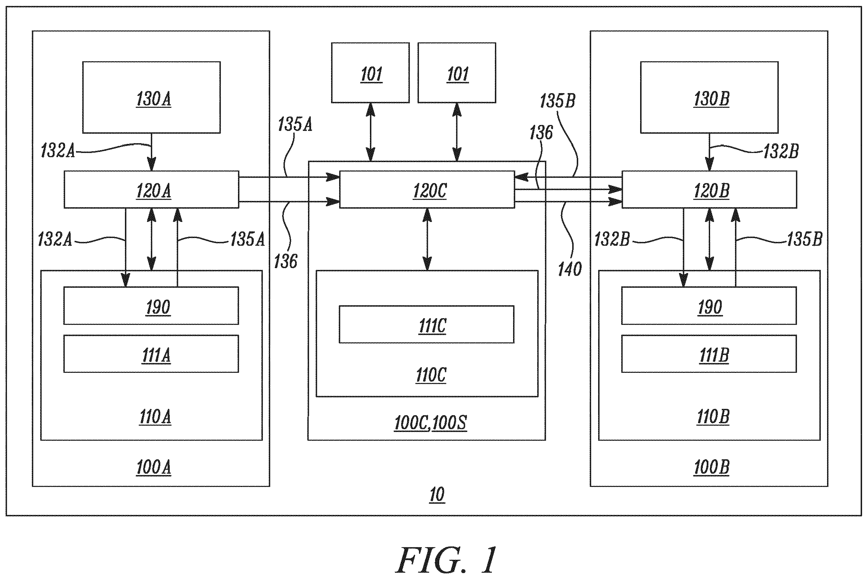

Referring now to the Figures, FIG. 1 illustrates a schematic block diagram of a system 10 according to an embodiment of the present disclosure.

The system 10 includes a first computing device 100A. The first computing device 100A includes at least one non-transitory computer-readable storage medium 110A (hereinafter referred to as "the non-transitory storage 110A") having instructions 111A stored thereon. That is, the instructions 111A are stored on the non-transitory storage 110A of the first computing device 100A. The first computing device 100A further includes at least one processor 120A (hereinafter referred to as "the processor 120A") coupled to the non-transitory storage 110A and configured to execute the instructions 111A. In other words, the processor 120A is communicatively coupled to the non-transitory storage 110A and configured to execute the instructions 111A stored in the non-transitory storage 110A.

The system 10 further includes a second computing device 100B different from the first computing device 100A. The second computing device 100B includes at least one non-transitory computer-readable storage medium 110B (hereinafter referred to as "the non-transitory storage 110B") having instructions 111B stored thereon. That is, the instructions 111B are stored on the non-transitory storage 110B of the second computing device 100B. The second computing device 100B further includes at least one processor 120B (hereinafter referred to as "the processor 120B") coupled to the non-transitory storage 110B and configured to execute the instructions 111B. In other words, the processor 120B is communicatively coupled to the non-transitory storage 110B and configured to execute the instructions 111A stored in the non-transitory storage 110B.

The system 10 further includes a device 100C for privacy-preserving authentication. The device 100C is different from the first computing device 100A and the second computing device 100B. The device 100C includes at least one non-transitory computer-readable storage medium 110C (hereinafter referred to as "the non-transitory storage 110C") having instructions 111C stored thereon. That is, the instructions 111C are stored on the non-transitory storage 110C of the device 100C. The device 100C further includes at least one processor 120C (hereinafter referred to as "the processor 120C") coupled to the non-transitory storage 110C and configured to execute the instructions 111C.

The system 10 further includes a first microphone 130A and a second microphone 130B separate from the first microphone 130A. In some embodiments, the device 100C is a server device 100S. Specifically, the device 100C may provide services, data, and/or resources to other computing devices over a network. In some embodiments, the first microphone 130A is communicatively coupled to the first computing device 100A that is communicatively coupled to the server device 100S, and the second microphone 130B is communicatively coupled to the second computing device 100B that is communicatively coupled to the server device 100S. In some embodiments, the first computing device 100A includes the first microphone 130A. In some embodiments, the second computing device 100B includes the second microphone 130B.

For purposes of example, the first microphone 130A may be a mobile microphone, such as a microphone contained within or connected to a mobile recording device, such as a dedicated mobile recording device, a smartphone, a tablet computer, or a laptop computer; and the second microphone 130B may be a stationary microphone, such as a microphone contained within or connected to a stationary recording device (e.g., a desktop computer) or a microphone that is mounted to a wall, counter, ceiling, or other surface or stationary object. By way of further example, first and second microphones 130A and 130B may be a single microphone device, such as a condenser or micro-electro-mechanical system (MEMS), or a local array of microphone devices. As used herein, a local microphone array is composed of two or more microphones whose recordings are processed by the same processing circuitry, such as a computer processor. In addition, microphone 130A need not be the same type of device as microphone 130B. By way of example, microphone 130A may be a single microphone and microphone 130B may be a local array of microphone devices. It should be appreciated that other configurations of microphones 130A and 130B are also possible. Although the first and second microphones 130A, 130B are referred to herein as "mobile" and "stationary" microphones, respectively, for purposes of example, in practice either of the first microphone 130A and the second microphone 130B may be fixed or stationary.

In some embodiments, at least one of the first and second computing devices 100A, 100B is a mobile device. For example, the first computing device 100A may be a mobile device, such as a dedicated mobile recording device, a smartphone, a tablet computer, a laptop computer, and so forth. In some embodiments, at least one of the first and second computing devices 100A, 100B may be a stationary device. For example, the second computing device 100B may be a stationary device, such as a stationary recording device (e.g., a desktop computer).

Each of the first microphone 130A and the second microphone 130B may capture audio (e.g., speech of the medical professional or patient) and produce an audio signal representing the audio as output. Each of the first microphone 130A and the second microphone 130B may be configured to generate an audio segment. The term "audio segment" refers to an audio signal representing a portion of the captured audio by a microphone. The portion of the captured audio represented by the audio segment may be in a range of from 100 milliseconds to about 5 seconds, for example.

The first microphone 130A generates a first audio segment 132A and the second microphone 130B generates a second audio segment 132B. The second audio segment 132B has been generated by the second microphone 130B contemporaneously with the first audio segment 132A. For example, the second audio segment 132B may represent at least a section (e.g., greater than 100 milliseconds, greater than 200 milliseconds, greater than 500 milliseconds, or greater than 1 second) of audio overlapping with the first audio segment 132A. As an example, if the first audio segment 132A represents audio captured by the first microphone 130A in a first time interval and the second audio segment 132B represents audio captured by the second microphone 130B in a second time interval, then the first time interval and the second time interval include an overlapping time period. The overlapping time period may be from 100 milliseconds to 2 seconds, for example. In some embodiments, the first audio segment 132A and the second audio segment 132B are generated from a same spoken conversation.

A speaker (e.g., a physician, a medical professional, a healthcare provider, etc.) in the same spoken conversation may be authenticated on the first computing device 100A. Therefore, the first computing device 100A may allow recording of the spoken conversation (e.g., between the medical professional and a patient in a patient encounter) captured by the first microphone 130A.

However, in some cases, it may be desired to record the spoken conversation using the second microphone 130B, for example, if the second microphone 130B captures a higher fidelity audio (thereby providing improved recording and/or transcription quality) as compared to the first microphone 130A. This may require authentication of the speaker on the second computing device 100B. Specifically, in some embodiments, the speaker in the spoken conversation has been authenticated on the first computing device 100A and is seeking to be authenticated on the second computing device 100B.

For authentication of the speaker on the second computing device 100B, the first microphone 130A and the second microphone 130B may need to be associated with a substantially similar location. In other words, the first microphone 130A and the second microphone 130B may need to be disposed proximal to each other for the authentication of the speaker on the second computing device 100B. Another consideration for the authentication of the speaker on the second computing device 100B may include privacy-preservation. That is, the second computing device 100B should record the audio captured by the second microphone 130B only after successful authentication of the speaker.

In the illustrated embodiment of FIG. 1, the non-transitory storage 110A of the first computing device 100A has further stored thereon a trained model 190. The trained model 190 has been configured to generate a privacy-preserving acoustic representation of an input audio segment. The term "privacy-preserving acoustic representation" refers to any digital representation of the input audio from which a speech content from the input audio cannot be inferred. By way of example, speech content is intended to include the information relevant to the generation of a written transcript, but does not include other speaker-specific aspects, such as vocal tract length, emotional state, etc. Specifically, the privacy-preserving acoustic representation includes one or more acoustic features of a speech in the input audio segment, but includes insufficient information to infer a content of the speech in the input audio segment. The privacy-preserving acoustic representation may convey information about voice characteristics of the speaker within a window of audio but may be invariant to the particular words spoken. The privacy-preserving acoustic representation may include acoustic features such as pitch, amplitude, frequency, time, formant (i.e., a concentration of acoustic energy around a particular frequency in the speech wave) of the speech in the input audio segment. In some embodiments, the trained model 190 may include a neural network model which is trained to produce the privacy-preserving acoustic representation from the input audio segment. In some embodiments, the privacy-preserving acoustic representation generated by the trained model 190 may be a vector. The vector (or the vector representation) refers to numerical representation of the input audio segment. In the illustrated embodiment of FIG. 1, the non-transitory storage 110B of the second computing device 100B has further stored thereon the trained model 190. That is, in the illustrated embodiment of FIG. 1, the non-transitory storage 110A of the first computing device 100A and the non-transitory storage 110B of the second computing device 100B both store the trained model 190.

In the illustrated embodiment of FIG. 1, the processor 120A of the first computing device 100A may be configured to execute the instructions 111A to receive the first audio segment 132A from the first microphone 130A, provide the first audio segment 132A to the trained model 190 stored in the non-transitory storage 110A, and receive a first privacy-preserving acoustic representation 135A from the trained model 190 based on the first audio segment 132A. That is, in the illustrated embodiment of FIG. 1, the first privacy-preserving acoustic representation 135A is locally generated on the first computing device 100A by the trained model 190 based on the first audio segment 132A. In some embodiments, the first privacy-preserving acoustic representation 135A is a vector.

The processor 120B of the second computing device 100B may be configured to execute the instructions 111B to receive the second audio segment 132B from the second microphone 130B, provide the second audio segment 132B to the trained model 190 stored in the non-transitory storage 110B, and receive a second privacy-preserving acoustic representation 135B from the trained model 190 based on the second audio segment 132B. That is, the second privacy-preserving acoustic representation 135B is locally generated on the second computing device 100B by the trained model 190 based on the second audio segment 132B. In some embodiments, the second privacy-preserving acoustic representation 135B is a vector.

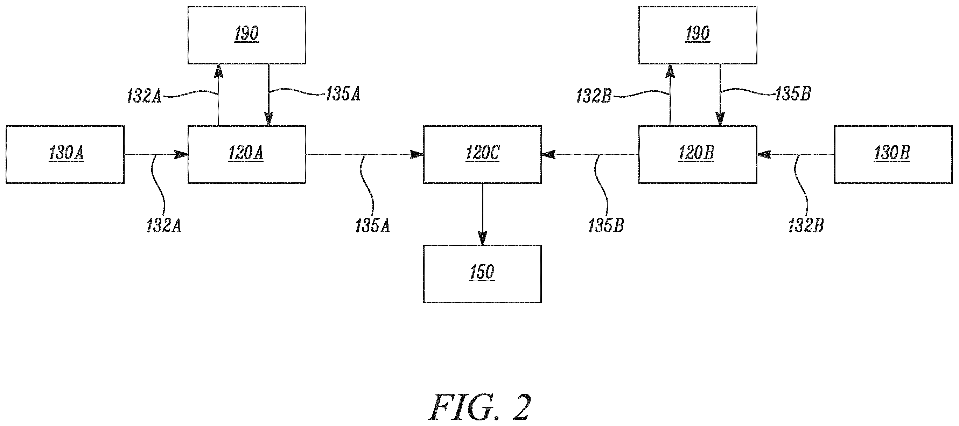

Referring now to FIGS. 1 and 2, the processor 120C is configured to execute the instructions 111C to receive the first privacy-preserving acoustic representation 135A of the first audio segment 132A associated with the first microphone 130A from the first computing device 100A. The processor 120C is further configured to execute the instructions 111C to receive the second privacy-preserving acoustic representation 135B of the second audio segment 132B associated with the second microphone 130B separate from the first microphone 130A from the second computing device 100B different from the first computing device 100A. As discussed above, the second audio segment 132B has been generated by the second microphone 130B contemporaneously with the first audio segment 132A.

The processor 120C is further configured to execute the instructions 111C to generate a similarity metric score 150 based on the first privacy-preserving acoustic representation 135A and the second privacy-preserving acoustic representation 135B. The similarity metric score 150 may represent a degree of similarity between the first privacy-preserving acoustic representation 135A and the second privacy-preserving acoustic representation 135B. The similarity metric score 150 being high may indicate that the first privacy-preserving acoustic representation 135A and the second privacy-preserving acoustic representation 135B have matching acoustic features, which may indicate that the first microphone 130A and the second microphone 130B are associated with a substantially similar location.

The processor 120C is further configured to execute the instructions 111C to determine that the first microphone 130A and the second microphone 130B are associated with the substantially similar location based on the similarity metric score 150. In some embodiments, the substantially similar location is associated with a medical provider office. In some embodiments, the substantially similar location may be associated with a room in a medical facility.

The processor 120C is further configured to execute the instructions 111C to authenticate that the first microphone 130A and the second microphone 130B are associated with the substantially similar location. Specifically, the processor 120C of the device 100C may authenticate the speaker on the second computing device 100B upon determining that the first microphone 130A and the second microphone 130B are associated with the substantially similar location. The second computing device 100B may subsequently start recording the audio captured by the second microphone 130B. The recorded audio may be transcribed and summarized into clinical notes.

The device 100C may enable privacy-preserving authentication of a healthcare provider. Specifically, the device 100C may authenticate the healthcare provider on the second computing device 100B by comparing the first privacy-preserving acoustic representation 135A and the second privacy-preserving acoustic representation 135B, which include insufficient information to infer a content of the speech in the first audio segment 132A and the second audio segment 132B, respectively. Furthermore, the second privacy-preserving acoustic representation 135B may be locally generated on the second computing device 100B. As a result, the content of the speech captured by the second microphone 130B may not be transmitted to the device 100C for authentication purposes. This may prevent transmission of undesired private conversations captured by the second microphone 130B to the device 100C.

In some embodiments, determining that the first microphone 130A and the second microphone 130B are associated with the substantially similar location based on the similarity metric score 150 further includes comparing the similarity metric score 150 to a predetermined threshold. In some embodiments, determining that the first microphone 130A and the second microphone 130B are associated with the substantially similar location based on the similarity metric score 150 further includes determining that the first microphone 130A and the second microphone 130B are associated with the substantially similar location when the similarity metric score 150 is above the predetermined threshold. The predetermined threshold may change over time. That is, the predetermined threshold may be dynamic in nature. In some cases, the predetermined threshold may be changed depending upon learned characteristics of the substantially similar location. For example, the predetermined threshold may be decreased if the substantially similar location is noisy. As another example, the predetermined threshold may be increased if the substantially similar location includes acoustic-enhancing features (e.g., if the substantially similar location includes sound dampening features).

In some embodiments, the system 10 further includes one or more computing resources 101 located in proximity to the substantiality similar location. Each of the one or more computing resources 101 may be communicably coupled to the device 100C. The one or more computing resources 101 may include, for example, resources related to computation, storage, networking, operations, data analytics, AI and machine learning, API management, serverless computing, containers, media, and so forth. In some embodiments, in response to authenticating, the processor 120C is further configured to execute the instructions 111C, in real-time or near real-time, to provide substantially instantaneous access to the one or more computing resources 101 located in proximity to the substantiality similar location. As a result, the speaker (or healthcare provider) may be granted access to the one or more computing resources 101 upon successful authentication.

In some embodiments, the processor 120C of the device 100C may be further configured to execute the instructions 111A to receive user credentials 136 from the first computing device 100A. In some embodiments, in response to authenticating, the processor 120C may be further configured to execute the instructions 111C to provide the user credentials 136 to the processor 120B of the second computing device 100B. The user credentials 136 may include authentication tokens of the speaker. The authentication tokens may include either simple or complex text strings or data values indicating an identifier that can be matched against an internal database by the device 100C. Alternatively, the authentication tokens may include encoded passwords or other indicia that assert that the entity for whom authentication is requested is genuine. One such example of an authentication token would be a SAML token. In some cases, a biometric measurement of the speaker may be obtained and rendered into the authentication tokens. Thus, the device 100C may propagate the user credentials 136 from the first computing device 100A to the second computing device 100B upon successful authentication of the speaker on the second computing device 100B. This may facilitate "logging in" of the speaker on the second computing device 100B upon successful authentication.

In some embodiments, in response to authenticating, the processor 120C may be further configured to execute the instructions 111C to provide a control signal 140 to the processor 120B of the second computing device 100B. The control signal 140 may include one or more commands to be executed by the second computing device 100B. The processor 120C may provide the control signal 140 to the processor 120B of the second computing device 100B in recurring intervals. In some embodiments, in response to authenticating, the processor 120B of the second computing device 100B may be further configured to execute the instructions 111B to execute the one or more commands of the control signal 140. In other words, the device 100C may control the second computing device 100B.

In some embodiments, the device 100C may initiate recording of the audio captured by the second microphone 130B at the second computing device 100B upon successful authentication of the speaker on the second computing device 100B. In some embodiments, the device 100C may initiate transcription of the audio recorded at the second computing device 100B. In some embodiments, the device 100C may initiate summarization of the audio recorded at the second computing device 100B into a clinical note.

In some embodiments, in response to authenticating, the processor 120C may be further configured to execute the instructions 111C to monitor audio streams recorded by the first microphone 130A and the second microphone 130B. In some embodiments, the processor 120C may compare the audio stream recorded by the second microphone 130B with the audio stream recorded by the first microphone 130A. Various techniques may be employed to compare the two audio streams once the speaker is authenticated.

In some embodiments, the device 100C may stop the recording of the audio at the second computing device 100B via the second microphone 130B when the two audio streams differ for a predetermined period of time (e.g., 30 secs). In some embodiments, the device 100C may stop the recording of the audio at the second computing device 100B via the second microphone 130B when the speech is not detected for a predetermined time period (e.g., 5 minutes). In some embodiments, the device 100C may stop the recording of the audio at the second computing device 100B via the second microphone 130B if the speaker manually terminates recording using the first computing device 100A. After termination of the audio recording by the device 100C, the speaker may need to be re-authenticated on the second computing device 100B before the audio captured by the second microphone 130B is recorded at the second computing device 100B. The device 100C may therefore ensure that only intentional speech is recorded, transcribed, and/or summarized at the second computing device 100B, thereby preventing undesired private conversations from being recorded, transcribed, and/or summarized at the second computing device 100B.

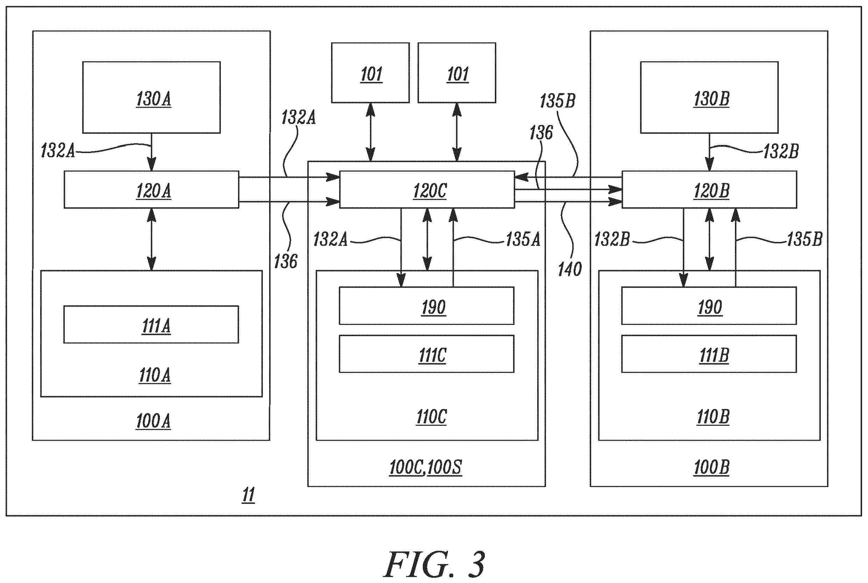

FIG. 3 illustrates a schematic block diagram of a system 11 according to another embodiment of the present disclosure. The system 11 is similar to the system 10 of FIG. 1, with like elements designated by like reference characters. However, the system 11 has a different configuration of the device 100C and the first computing device 100A.

Specifically, in the illustrated embodiment of FIG. 3, the non-transitory storage 110C of the device 100C has further stored thereon the trained model 190. Further, the non-transitory storage 110A of the first computing device 100A does not store the trained model 190.

The processor 120C may be configured to execute the instructions 111C to receive the first audio segment 132A associated with the first microphone 130A from the first computing device 100A. The processor 120C may be further configured to execute the instructions 111C to provide the first audio segment 132A to the trained model 190 stored in the non-transitory storage 110C of the device 100C. The processor 120C may be further configured to execute the instructions 111C to receive the first privacy-preserving acoustic representation 135A generated by the trained model 190. In this embodiment, the first privacy-preserving acoustic representation 135A is not locally generated on the first computing device 100A, but is generated on the device 100C by the trained model 190 based on the first audio segment 132A. This may be acceptable if the speaker is already authenticated on the first computing device 100A. However, in order to preserve the privacy of the audio captured by the second microphone 130B, the second privacy-preserving acoustic representation 135B is locally generated on the second computing device 100B by the trained model 190.

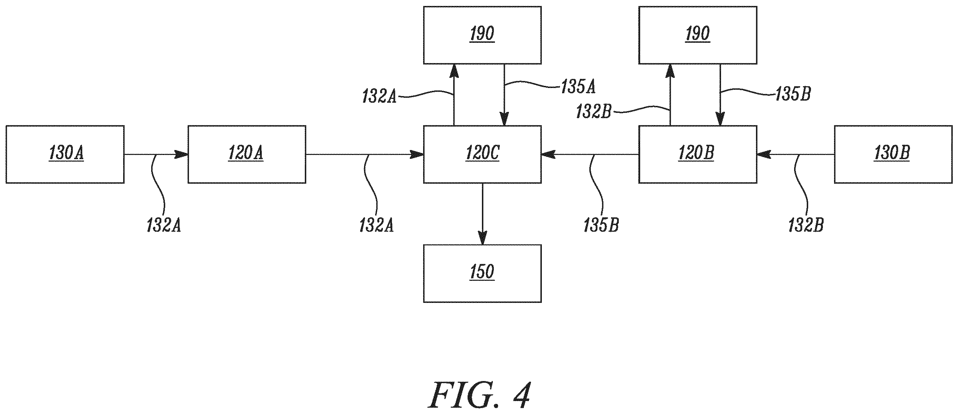

Referring to FIGS. 3 and 4, the processor 120C may be further configured to execute the instructions 111C to generate the similarity metric score 150 based on the first privacy-preserving acoustic representation 135A and the second privacy-preserving acoustic representation 135B. The processor 120C may be further configured to execute the instructions 111C to determine that the first microphone 130A and the second microphone 130B are associated with the substantially similar location based on the similarity metric score 150. The processor 120C may be further configured to execute the instructions 111C to authenticate that the first microphone 130A and the second microphone 130B are associated with the substantially similar location. The device 100C may also perform various other functions described above with reference to FIGS. 1 and 2.

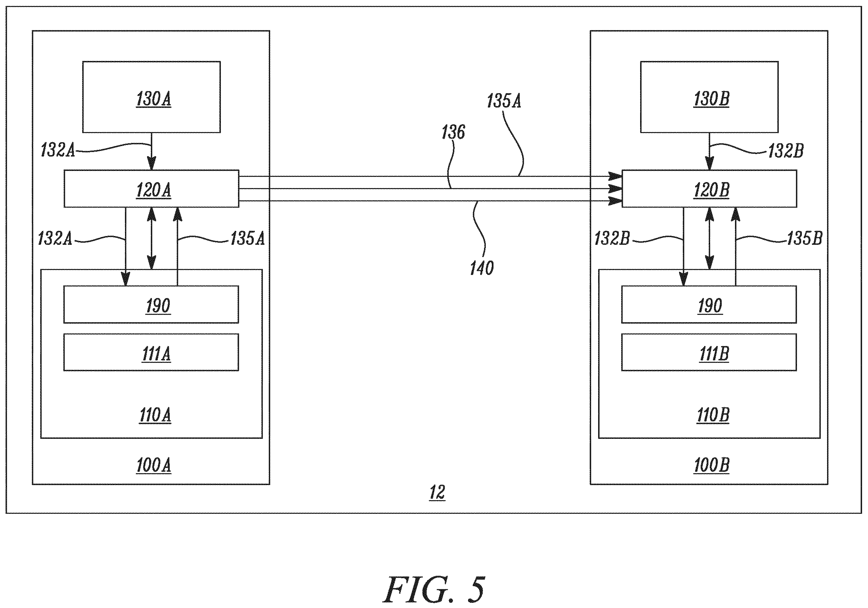

FIG. 5 illustrates a schematic block diagram of a system 12 according to another embodiment of the present disclosure. The system 12 is similar to the system 10 of FIG. 1, with like elements designated by like reference characters. However, the system 12 does not include the device 100C of the system 10. The functionality provided by the device 100C in the system 10 is provided by the second computing device 100B in the system 12.

Specifically, in the illustrated embodiment of FIG. 5, the first computing device 100A and the second computing device 100B are communicatively coupled to each other. The processor 120B of the second computing device 100B is configured to execute the instructions 111B to receive the first privacy-preserving acoustic representation 135A of the first audio segment 132A associated with the first microphone 130A from the first computing device 100A. The processor 120B of the second computing device 100B is further configured to execute the instructions 111B to receive the second audio segment 132B from the second microphone 130B, provide the second audio segment 132B to the trained model 190 stored in the non-transitory storage 110B, and receive the second privacy-preserving acoustic representation 135B from the trained model 190 based on the second audio segment 132B.

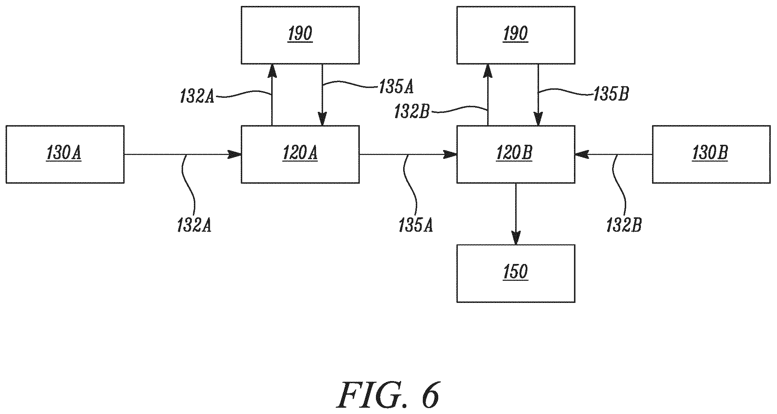

Referring to FIG. 5 and 6, the processor 120B may be further configured to execute the instructions 111B to generate the similarity metric score 150 based on the first privacy-preserving acoustic representation 135A and the second privacy-preserving acoustic representation 135B. The processor 120B may be further configured to execute the instructions 111B to determine that the first microphone 130A and the second microphone 130B are associated with a substantially similar location based on the similarity metric score 150. The processor 120B may be further configured to execute the instructions 111C to authenticate that the first microphone 130A and the second microphone 130B are associated with the substantially similar location. The second computing device 100B may also perform various other functions of the device 100C described above with reference to FIGS. 1 and 2. The system 12 may allow peer-to-peer privacy-preserving authentication, without a need of a server device (such as the device 100C of FIG. 1).

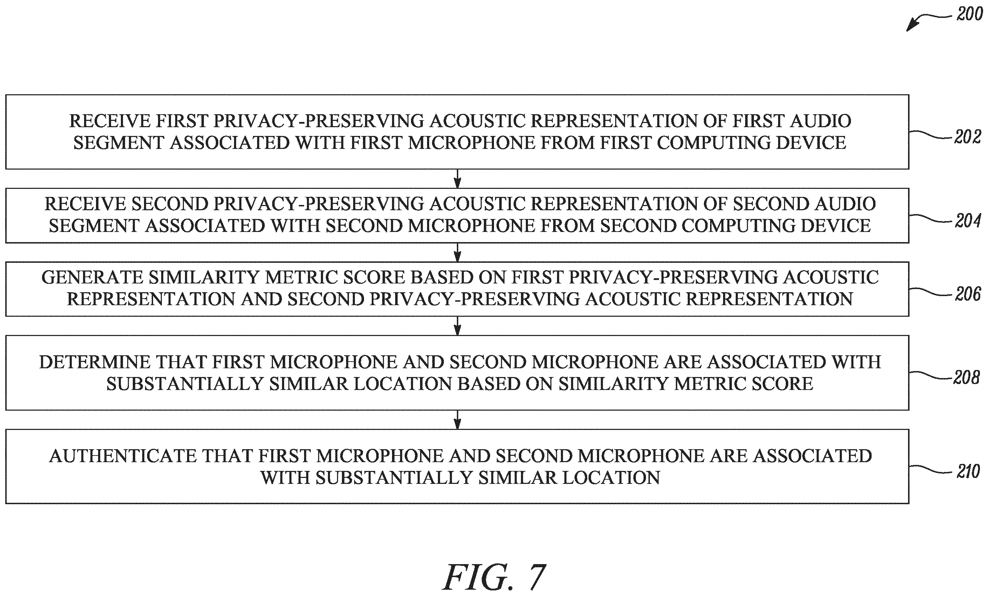

FIG. 7 illustrates a flowchart depicting various steps of a computer-implemented method 200 (hereinafter referred to as "the method 200") for privacy-preserving authentication according to an embodiment of the present disclosure. The method 200 may be carried out by any suitable computing device, such as the device 100C of FIGS. 1 and 3, and the second computing device 100B of FIG. 5. The method 200 will be described with additional reference to FIGS. 1 to 6.

At step 202, the method 200 includes receiving a first privacy-preserving acoustic representation of a first audio segment associated with a first microphone. The first privacy-preserving acoustic representation is generated by a trained model based on the first audio segment. The trained model has been configured to generate a privacy-preserving acoustic representation of an input audio segment. Referring to FIGS. 1 and 2, for example, the method 200 may include receiving, by the device 100C, the first privacy-preserving acoustic representation 135A of the first audio segment 132A from the first computing device 100A. Referring to FIGS. 5 and 6, for example, the method 200 may include receiving, by the second computing device 100B, the first privacy-preserving acoustic representation 135A of the first audio segment 132A from the first computing device 100A.

In some embodiments, the method 200 may include receiving the first privacy-preserving acoustic representation of the first audio segment from a device different from the first computing device. Referring to FIG. 3, for example, the method 200 may include receiving the first privacy-preserving acoustic representation 135A of the first audio segment 132A from the device 100C.

In some embodiments, the privacy-preserving acoustic representation includes one or more acoustic features of a speech in the input audio segment, but includes insufficient information to infer a content of the speech in the input audio segment.

In some embodiments, the first privacy-preserving acoustic representation is a vector. Referring to FIG. 1, for example, the first privacy-preserving acoustic representation 135A may be a vector.

At step 204, the method 200 further includes receiving a second privacy-preserving acoustic representation of a second audio segment associated with a second microphone separate from the first microphone from a second computing device different from the first computing device. The second audio segment has been generated by the second microphone contemporaneously with the first audio segment. The second privacy-preserving acoustic representation is locally generated on the second computing device by the trained model based on the second audio segment. Referring to FIGS. 1 and 3, for example, the method 200 may include receiving, by the device 100C, the second privacy-preserving acoustic representation 135B of the second audio segment 132B associated with the second microphone 130B from the second computing device 100B. Referring to FIG. 5, for example, the method 200 may include receiving, by the processor 120B of the second computing device 100B, the second privacy-preserving acoustic representation 135B of the second audio segment 132B associated with the second microphone 130B from the second computing device 100B.

In some embodiments, the first audio segment and the second audio segment are generated from a same spoken conversation. Referring to FIG. 1, for example, the first audio segment 132A and the second audio segment 132B may be generated from the same spoken conversation.

At step 206, the method 200 further includes generating a similarity metric score based on the first privacy-preserving acoustic representation and the second privacy-preserving acoustic representation. Referring to FIGS. 2 and 4, for example, the method 200 may include generating, by the processor 120C of the device 100C, the similarity metric score 150 based on the first privacy-preserving acoustic representation 135A and the second privacy-preserving acoustic representation 135B. Referring to FIG. 6, for example, the method 200 may include generating, by the processor 120B of the second computing device 100B, the similarity metric score 150 based on the first privacy-preserving acoustic representation 135A and the second privacy-preserving acoustic representation 135B.

At step 208, the method 200 further includes determining that the first microphone and the second microphone are associated with a substantially similar location based on the similarity metric score. Referring to FIGS. 2, 4, and 6, for example, the method 200 may include determining that the first microphone 130A and the second microphone 130B are associated with the substantially similar location based on the similarity metric score 150.

In some embodiments, the substantially similar location is associated with a medical provider office.

In some embodiments, determining that the first microphone and the second microphone are associated with the substantially similar location based on the similarity metric score further includes comparing the similarity metric score to a predetermined threshold, and determining that the first microphone and the second microphone are associated with the substantially similar location when the similarity metric score is above the predetermined threshold. Referring to FIGS. 2, 4, and 6, for example, determining that the first microphone 130A and the second microphone 130B are associated with the substantially similar location based on the similarity metric score 150 further includes comparing the similarity metric score 150 to the predetermined threshold, and determining that the first microphone 130A and the second microphone 130B are associated with the substantially similar location when the similarity metric score 150 is above the predetermined threshold.

At step 208, the method 200 further includes authenticating that the first microphone and the second microphone are associated with the substantially similar location. Referring to FIGS. 1, 3, and 5, for example, the method 200 may include authenticating that the first microphone 130A and the second microphone 130B are associated with the substantially similar location.

In some embodiments, in response to authenticating, the method 200 further includes providing, in real-time or near real-time, substantially instantaneous access to one or more computing resources located in proximity to the substantiality similar location. Referring to FIG. 1, for example, the method 200 may include providing, in real-time or near real-time, substantially instantaneous access to the one or more computing resources 101 located in proximity to the substantiality similar location.

In some embodiments, the method 200 is performed by a server device. The first microphone is communicatively coupled to the first computing device that is communicatively coupled to the server device. The second microphone is communicatively coupled to the second computing device that is communicatively coupled to the server device. Referring to FIGS. 1 and 3, for example, the method 200 may be performed by the server device 100S.

In some embodiments, at least one of the first and second computing devices is a mobile device. Referring to FIG. 1, for example, the first computing device 100A may be a mobile device.

In some embodiments, a speaker in the spoken conversation has been authenticated on the first computing device and is seeking to be authenticated on the second computing device. Referring to FIG. 1, for example, the speaker in the spoken conversation may have been authenticated on the first computing device 100A and may be seeking to be authenticated on the second computing device 100B.

The method 200 may enable privacy-preserving authentication of a healthcare provider. Specifically, the method 200 may authenticate the healthcare provider on the second computing device by comparing the first privacy-preserving acoustic representation and the second privacy-preserving acoustic representation, which include insufficient information to infer a content of the speech in the first audio segment and the second audio segment, respectively. Furthermore, the second privacy-preserving acoustic representation may be locally generated on the second computing device. As a result, the content of the speech captured by the second microphone may not be transmitted to any external device for authentication purposes. This may prevent transmission of undesired private conversations captured by the second microphone to any external device.

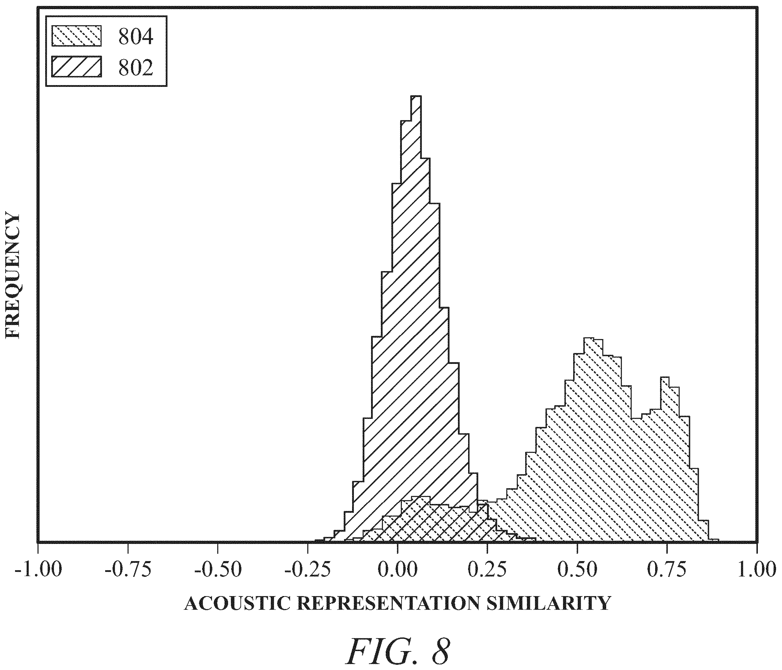

FIG. 8 is an example set of histograms showing a similarity score using a conventional speaker verification system. In the depicted example, histogram 802 shows the frequency distribution of similarity scores between neural-network-based acoustic representations from different speakers. The histogram 804 shows the frequency distribution of similarity scores between acoustic representations from the same speaker speaking different sentences, the typical scenario for text-independent speaker verification. Due to the degree of overlap between the two distributions, any choice of similarity threshold to separate the distributions will result in some misclassifications. For these data, the equal error rate balancing same- vs. different-speaker misclassifications is 9.6%.

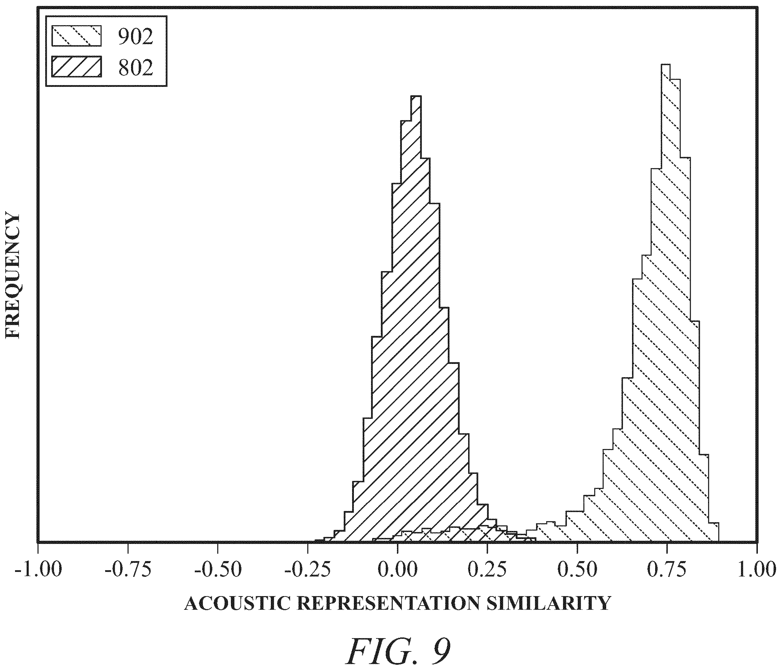

FIG. 9 is an example set of histograms showing a similarity score using techniques described in this disclosure. In the depicted example, histogram 902 shows the frequency distribution of similarity scores between acoustic representations of simultaneously recorded audio from different microphones in a room. The overlap of the 802 and 902 distributions is significantly less than between 802 and 804, indicating higher accuracy in identifying simultaneous recordings than in comparing different recordings of the same speaker. For these data, the equal error rate balancing simultaneous recording vs. different-speaker misclassifications is 3.0%. **In** other words, the techniques of this disclosure have been shown to increase accuracy by as much as 31.25% over conventional speech verification systems and approaches that rely on comparing different recordings of the same speaker.

**In** addition, having access to one or more stored recordings of the same speaker requires some amount of training, tuning, or other configurations related to the speaker being verified. **In** the present disclosure, the system is designed to work "out of the box," with little to no training or tuning required to be able to accurately authenticate a speaker. That is, the systems and techniques of the present disclosure can achieve the improved accuracy as described above while still avoiding potentially lengthy training or configuration efforts in implementing conventional techniques.

Furthermore, it should be apparent to one of ordinary skill that systems and techniques of the present disclosure reduce resource utilization on systems so configured because there are no storage implications as the system is adopted and used at scale. That is, systems of the present disclosure are capable of authenticating any number of speakers without the need to store a representative acoustic representation. Conversely, conventional techniques must be able to access these stored representations to authenticate any speaker which increases storage requirements as the system is used at scale and introduces additional points of failure into such system. For instance, in a conventional approach, if the representative samples are inaccessible (e.g., because of device failure or other connectivity issue), the conventional techniques do not work as intended.

**In** short, the systems and techniques of the present disclosure improve the underlying operation of the speaker verification computing technology by improving speaker verification accuracy in a manner not presently achievable using existing systems and techniques.

Unless otherwise indicated, all numbers expressing feature sizes, amounts, and physical properties used in the specification and claims are to be understood as being modified by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

## Claims

1. A device for privacy-preserving authentication, the device comprising:
at least one non-transitory computer-readable storage medium having instructions stored thereon; and
at least one processor coupled to the at least one non-transitory computer-readable storage medium and configured to execute the instructions to:
receive a first privacy-preserving acoustic representation of a first audio segment associated with a first microphone from a first computing device, wherein the first privacy-preserving acoustic representation is locally generated on the first computing device by a trained model based on the first audio segment, and wherein the trained model has been configured to generate a privacy-preserving acoustic representation of an input audio segment;
receive a second privacy-preserving acoustic representation of a second audio segment associated with a second microphone separate from the first microphone from a second computing device different from the first computing device, wherein the second audio segment has been generated by the second microphone contemporaneously with the first audio segment, and wherein the second privacy-preserving acoustic representation is locally generated on the second computing device by the trained model based on the second audio segment;
generate a similarity metric score based on the first privacy-preserving acoustic representation and the second privacy-preserving acoustic representation;
determine that the first microphone and the second microphone are associated with a substantially similar location based on the similarity metric score; and
authenticate that the first microphone and the second microphone are associated with the substantially similar location.

2. The device of claim 1, wherein the substantially similar location is associated with a medical provider office.

3. The device of any of claims 1-2, wherein, in response to authenticating, the processor is further configured to execute the instructions, in real-time or near real-time, to provide substantially instantaneous access to one or more computing resources located in proximity to the substantiality similar location.

4. The device of any of claims 1-3, wherein the first privacy-preserving acoustic representation is a vector.

5. The device of any of claims 1-4, wherein determining that the first microphone and the second microphone are associated with the substantially similar location based on the similarity metric score further comprises:
comparing the similarity metric score to a predetermined threshold; and
determining that the first microphone and the second microphone are associated with the substantially similar location when the similarity metric score is above the predetermined threshold.

6. The device of any of claims 1-5, wherein the device is a server device, wherein the first microphone is communicatively coupled to the first computing device that is communicatively coupled to the server device, and wherein the second microphone is communicatively coupled to the second computing device that is communicatively coupled to the server device.

7. The device of any of claims 1-6, wherein at least one of the first and second computing devices is a mobile device.

8. The device of any of claims 1-7, wherein the first audio segment and the second audio segment are generated from a same spoken conversation.

9. The device of any of claims 1-8, wherein a speaker in the spoken conversation has been authenticated on the first computing device and is seeking to be authenticated on the second computing device.

10. The device of any of claims 1-9, wherein the privacy-preserving acoustic representation includes one or more acoustic features of a speech in the input audio segment, but includes insufficient information to infer a content of the speech in the input audio segment.

11. A computer-implemented method for privacy-preserving authentication, the computer-implemented method comprising:
receiving a first privacy-preserving acoustic representation of a first audio segment associated with a first microphone from a first computing device, wherein the first privacy-preserving acoustic representation is locally generated on the first computing device by a trained model based on the first audio segment, and wherein the trained model has been configured to generate a privacy-preserving acoustic representation of an input audio segment;
receiving a second privacy-preserving acoustic representation of a second audio segment associated with a second microphone separate from the first microphone from a second computing device different from the first computing device, wherein the second audio segment has been generated by the second microphone contemporaneously with the first audio segment, and wherein the second privacy-preserving acoustic representation is locally generated on the second computing device by the trained model based on the second audio segment;
generating a similarity metric score based on the first privacy-preserving acoustic representation and the second privacy-preserving acoustic representation;
determining that the first microphone and the second microphone are associated with a substantially similar location based on the similarity metric score; and
authenticating that the first microphone and the second microphone are associated with the substantially similar location.

12. The computer-implemented method of claim 11, wherein the substantially similar location is associated with a medical provider office.

13. The computer-implemented method of any of claims 11-12, wherein, in response to authenticating, further comprising providing, in real-time or near real-time, substantially instantaneous access to one or more computing resources located in proximity to the substantiality similar location.

14. The computer-implemented method of any of claims 11-13, wherein the first privacy-preserving acoustic representation is a vector.

15. The computer-implemented method of any of claims 11-14, wherein determining that the first microphone and the second microphone are associated with the substantially similar location based on the similarity metric further comprises:
comparing the similarity metric score to a predetermined threshold; and
determining that the first microphone and the second microphone are associated with the substantially similar location when the similarity metric score is above the predetermined threshold.
